# EUROPEAN PATENT SPECIFICATION

(11) **EP 2 428 148 B1**
(45) Date of publication and mention of the grant of the patent: **28.09.2016**
(21) Application number: 09851696.6
(22) Date of filing: 25.11.2009
(51) Int. Cl.: A47L 9/00

(54) **UPRIGHT TYPE VACUUM CLEANER**
STIELSTAUBSAUGER
ASPIRATEUR DE TYPE VERTICAL

(43) Date of publication of application: 14.03.2012
(73) Proprietor: LG Electronics Inc., Seoul 150-721 (KR)
(72) Inventor: HWANG, Geun Bae, Changwon-si Gyeongsangnam-do 641-711 (KR); HA, Gun Ho, Changwon-si Gyeongsangnam-do 641-711 (KR)
(74) Representative: Vossius & Partner Patentanwälte Rechtsanwälte mbB
(86) International application number: PCT/KR2009/006968
(87) International publication number: WO 2011/065599

(56) References cited:
- EP-A2- 0 983 874
- WO-A1-2009/030886
- WO-A1-2009/039394
- AU-B2- 2001 291 482
- DE-A1-102008 019 976
- DE-U1-202005 012 682
- GB-A- 2 391 459
- JP-A- 2002 177 170
- US-A- 4 173 809
- US-A1- 2006 130 268
- US-A1- 2007 272 463
- US-A1- 2008 018 167

## Description

### [Technical Field]

The present invention relates to an upright type vacuum cleaner, more specifically, to an upright type vacuum cleaner that includes a body or suction nozzle having an efficient direction change.

### [Background Art]

Vacuum cleaners are home appliances that are able to suck external dust by using a vacuum pressure generated by a motor provided in each of their bodies.

Such vacuum cleaners may be categorized based on their shapes into canister types and upright types.

In an upright type vacuum cleaner, a body and a suction nozzle are connected by a predetermined suction hose. If a user moves the suction nozzle by using a handle provided in the suction hose, the body will move correspondingly.

That is, such upright type vacuum cleaner includes the body and the suction nozzle which are connected with each other such that the user may vacuum-clean, with dragging the body.

According to a conventional upright type vacuum cleaner, a wheel member is rotatably provided in a body. If the user pulls the body, the wheel member rolling-moves and the body moves correspondingly.

WO 2009/039394 A1 relates to a domestic cleaning appliance, such as upright vacuum cleaners or sweepers which are easy to manoeuvre.

### [Disclosure]

### [Technical Problem]

However, the wheel member is capable of rotating only forward and rearward. In case of making left or right turning, the wheel member has a limited rotation radius and as a result, the user may feel inconvenient when trying to change the movement direction of the body quickly.

Especially, in case of meeting an obstacle when pulling or pushing the body, the user may have the above inconvenience because of the weight of the body.

### [Technical Solution]

To solve these problems, an object of the present invention is to provide an upright type vacuum cleaner having a movement direction changed smoothly and quickly as necessary during the movement.

To achieve this objects and other advantages and in accordance with the purpose of the invention, as embodied and broadly described herein, a upright type vacuum cleaner according to claim 1 is provided.

In a particular embodiment of the invention the vacuum cleaner includes a body; a motor accommodation part accommodating a motor generating a vacuum pressure, in communication with the body; and a wheel member provided in the motor accommodation part, in contact with a floor.

### [Advantageous Effects]

The present invention has following advantageous effects.

According to the canister type vacuum cleaner, change of the movement direction may be performed quickly and efficiently.

Specifically, if a user intends to move the body in a different direction from a current
movement direction while moving the body by using the rotational movement of the main rotation member and the motor accommodation part, the user applies a force to the body toward the wished direction and he/she can change the direction of the body smoothly by the rotation of the auxiliary rotation members.

Furthermore, even if the body colliding with an outside object such as a table or book shelf during the movement of the upright type vacuum cleaner, the movement direction of the body may be guided quickly in a different direction momentarily after the collision. As a result, the body is prevented from being upturned by the collision.

### [Description of Drawings]

The scope of the present invention is defined by the features of the drawings.

The accompanying drawings, which are included to provide further understanding of the disclosure and are incorporated in and constitute a part of this application, illustrate embodiments of the disclosure and together with the description serve to explain the principle of the disclosure.

In the drawings:
FIG. 1 is a perspective view illustrating an upright type vacuum cleaner according to an exemplary embodiment;
FIG. 2 is a side-sectional view illustrating the upright type vacuum cleaner;
FIG. 3 is a perspective view illustrating a first wheel member of a wheel member provided in the upright type vacuum cleaner;
FIG. 4 is a perspective view illustrating a second wheel member of a wheel member provided in the upright type vacuum cleaner;
FIG. 5 is a plane view illustrating a movement direction of the upright type vacuum cleaner, seen below;
FIG. 6 is a perspective view illustrating an upright type vacuum cleaner according to another embodiment;
FIG. 7 is a front view illustrating a motor accommodation part and a wheel member according to a first embodiment applied to the upright type vacuum cleaner of FIG. 6;
FIG. 8 is a front view illustrating a motor accommodation part and a wheel member according to a second embodiment applied to the upright type vacuum cleaner of FIG. 6; and
FIG. 9 is a front view illustrating a motor accommodation part and a wheel member according to a third embodiment applied to the upright type vacuum cleaner of FIG. 6.

### [Best Mode]

As follows, an exemplary embodiment will be described in the accompanying drawings.

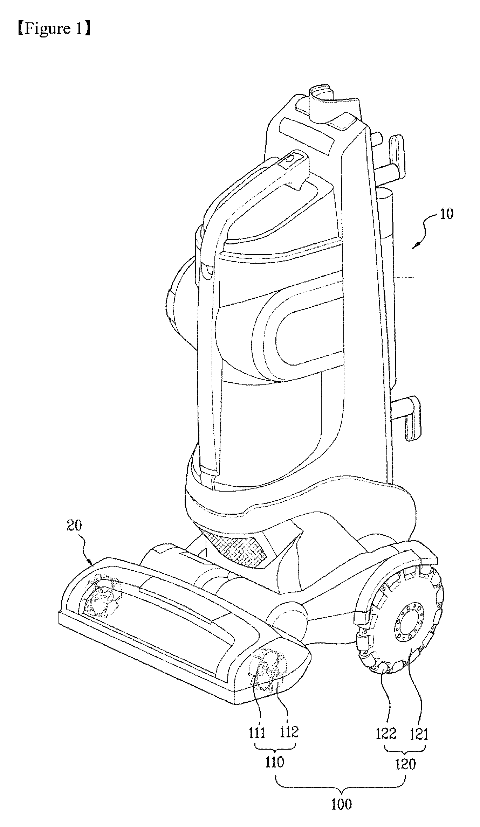

As shown in FIG. 1, an upright type vacuum cleaner according to the exemplary embodiment includes a body 10 including a dust collection device and a dust separation device mounted therein and a suction nozzle 20 connected to the body 10.

A wheel member 100 is provided in each of a lower side portion of the body 10 and the suction nozzle 20. Here, the wheel member 100 may be provided only in the body 10.

The wheel member mounted to the suction nozzle 20 will be referenced to as a first wheel member 110 and the wheel member mounted to the body 10 will be referenced to as a second wheel member 120.

Here, the size of the first wheel member 110 may be smaller than that of the second wheel member 120. The first wheel member 110 and the second wheel member 120 include a main rotation member 111 and 121 and an auxiliary rotation member 112 and 122, respectively.

The main rotation member 111 and 121 may be rotated toward a forward/rearward direction of the body and suction nozzle 20 and the auxiliary rotation member 112 and 122 may be rotated toward a different direction from the rotational direction of the main rotation member 111 and 121.

That is, the rotational direction of the auxiliary rotation member may be orthogonal or diagonal with respect to the rotational direction of the main rotation member 111 and 121.

Here, the first wheel members 110 may be arranged inside the suction nozzle 20, spaced apart a predetermined distance from each other, not to be exposed outside. The second wheel members 120 may be arranged in body opposite side portions of the body 10, exposed outside.

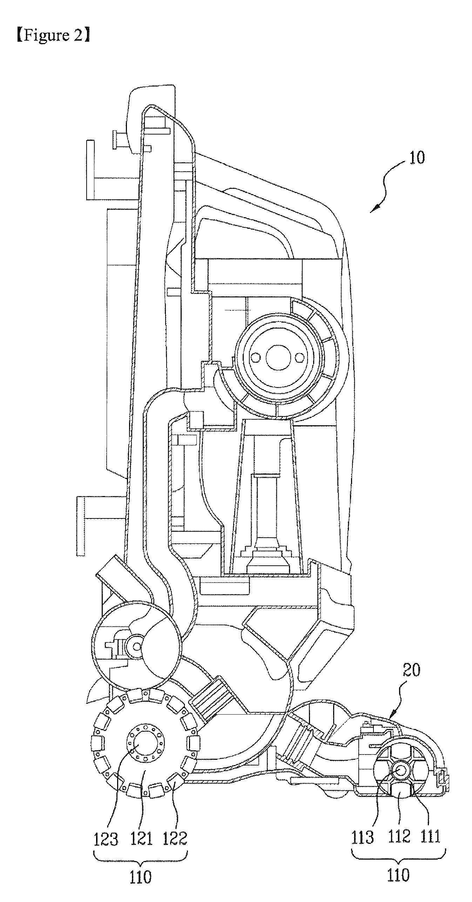

As shown in FIG. 2, the suction nozzle 20 is located in front of the body 10 and thus the first wheel members 110 may be located approximately in front of the second wheel members 120.

Rotational shaft supporters 113 and 123 rotatably coupled to both of the body 10 and the suction nozzle 20 are formed in centers of the main rotation members 111 and 121 of the first and second wheel members 110 and 120, respectively, to rotatably support the first wheel member 110 and the second wheel member 120.

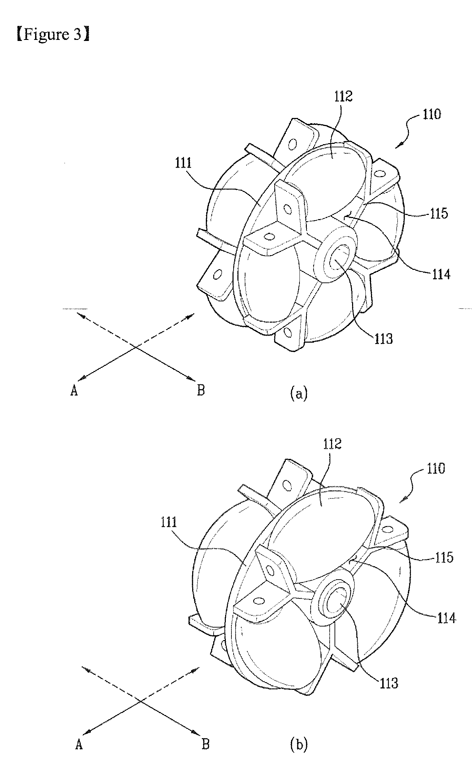

As shown in FIG. 3, the main rotation member 111 of the first wheel member 110 is provided in a disk shape and partition walls 115 are provided in the main rotation member 111 .

Accommodation parts 114 are provided between the partition walls 115 to accommodate the auxiliary rotation members 112 therein rotatably and the auxiliary rotation member 112 accommodated in the accommodation part 114 is rotatably coupled to the partition wall 115.

The partition wall 115 is extended outward from the rotational shaft supporter 113 and an end of the partition wall 115 is divided in two ways to disperse the load in case of contacting the floor.

The auxiliary rotation members 112 may be arranged in both side portions of the main rotation member 111 in two lines. One of the auxiliary rotation members 112 arranged in a predetermined line may be alternative with respect to another one arranged in the other line.

This is because it is preferable that the auxiliary rotation members 112 are in contact with the floor continuously.

An outermost portion of the auxiliary rotation member 112 may be projected outward further than an outermost portion of the main rotation member 111.

Here, FIG. 3A shows four auxiliary rotation members arranged in the main rotation member 111 and FIG. 3B shows three auxiliary rotation members 112 arranged in the main rotation member 111.

As the number of the auxiliary rotation members 112 is smaller, the size of each auxiliary rotation member may be larger correspondingly.

In case three or four auxiliary rotation members 112 are mounted to the main rotation member 111 in the first wheel member 110, the shape of each auxiliary rotation member may be like Rugby ball or raised pot to make the first wheel member 110 rotated smoothly.

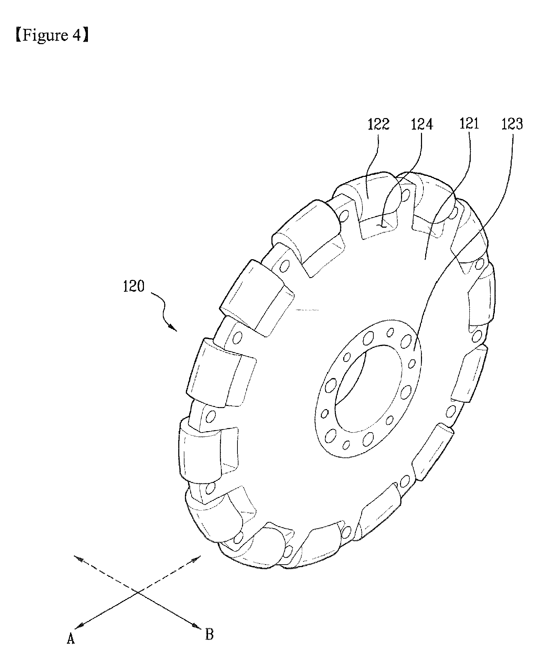

As shown in FIG. 4, the second wheel member 120 includes the main rotation member 121 formed in a disk shape and an auxiliary rotation member 122 rotatably provided in a circumferential portion of the main rotation member 121.

Accommodation parts 124 are provided in the circumferential portion of the main rotation member 1221 to accommodate the auxiliary rotation members 122. The auxiliary rotation members 122 are arranged to be accommodated in the accommodation parts 124, respectively, spaced apart a predetermined distance from each other.

As mentioned above, the rotational supporter 123 may be provided in a center of the main rotation member 121.

The auxiliary rotation members 122 directly contact with the floor in the second wheel member 120 and thus an outermost portion of the auxiliary rotation member 122 may be projecteded outward further than an outermost portion of the main rotation member 121.

This is because the rotational directions of the main rotation member 121 and the auxiliary rotation members 122 should be changed quickly as mentioned above.

Each auxiliary rotation member 122 arranged in the second wheel member 120 may have a cylinder shape having a regular diameter in comparison to a diameter of the auxiliary rotation member 112 provided in the first wheel member 110 shown in FIG. 3.

This is because a ratio between the length of the auxiliary rotation member 112 of the first wheel member 110 and the circumference of the first wheel member 110 is different from a ratio between the length of the auxiliary rotation member 122 and a circumference of the second wheel member 120.

That is, the length of the auxiliary rotation member 112 of the first wheel member 110 shown in FIG. 2 is approximately 1/7∼1/8 of the overall circumference of the first wheel member and the length of the auxiliary rotation member 122 of the second wheel member 120 shown in FIG. 4 is 1/20∼1/25 of the circumference of the second wheel member 120.

As the circumference of the wheel member is different from the length of the auxiliary rotation member more noticeably; the shape of the auxiliary rotation member may be a cylindrical roller.

Here, the body may be movable freely along'A'that is a rotational direction of the main rotation member 121 and'B'that is a rotational direction of the auxiliary rotation members 122 and along opposite directions to theses directions. If the auxiliary rotation members 122 are arranged in a diagonal direction, the body may be movable freely in more directions.

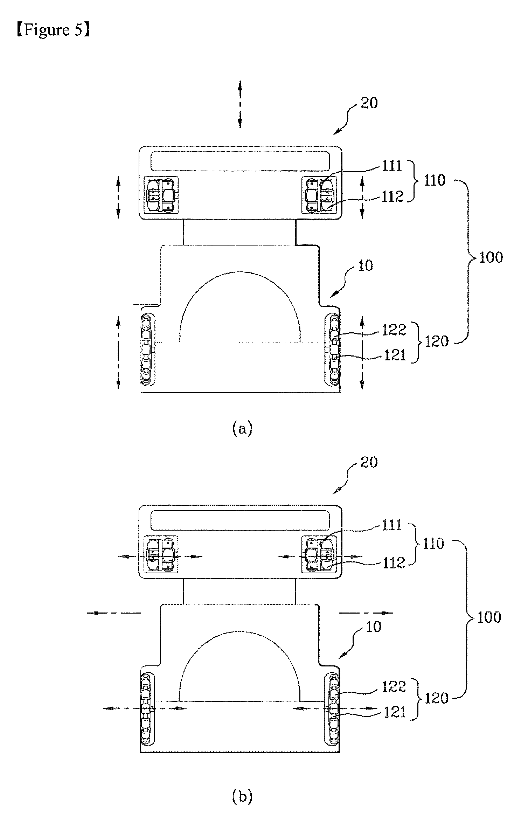

FIG. 5 is a diagram illustrating movement operation of the upright type vacuum cleaner. FIG. 5A illustrates the upright type vacuum cleaner moving forward and rearward.

If the user moves the vacuum cleaner forward or rearward, holding the body 10, the first wheel member 110 mounted in the suction nozzle 20 and the second wheel member 120 mounted in the side portion of the body 10 will be moved forward and rearward by the force applied by the user.

At this time, the main rotation members 111 and 121 are rotated in a forward and rearward direction, with the auxiliary rotation members 112 and 122 mounted in the first and second wheel members 110 and 120 and then the first and second wheel members 110 and 120 are rotated toward the forward and rearward direction of the body 10.

As shown in FIG. 5B, if the user moves the body 10 in a leftward and rightward direction, the auxiliary rotation members 112 and 122 of the first and second wheel members 110 and 120 in contact with the floor will be rotated toward the leftward or rightward direction.

As a result, the body 10 and the suction nozzle 20 may be moveable in the leftward or rightward direction.

Because of that, the inconvenience of rotating the body and the suction nozzle 20 along a limited rotation radius is solved if the movement direction of both of the body 10 and the suction nozzle 20 is changed.

This embodiment presents that the body 10 and the suction nozzle 20 are movable in forward/rearward and leftward/rightward directions and the present invention is not limited thereto. The body 10 and the suction nozzle 20 may be movable in a diagonal direction with respect to the forward/rearward direction according to the installation direction of the auxiliary rotation members 112 and 122.

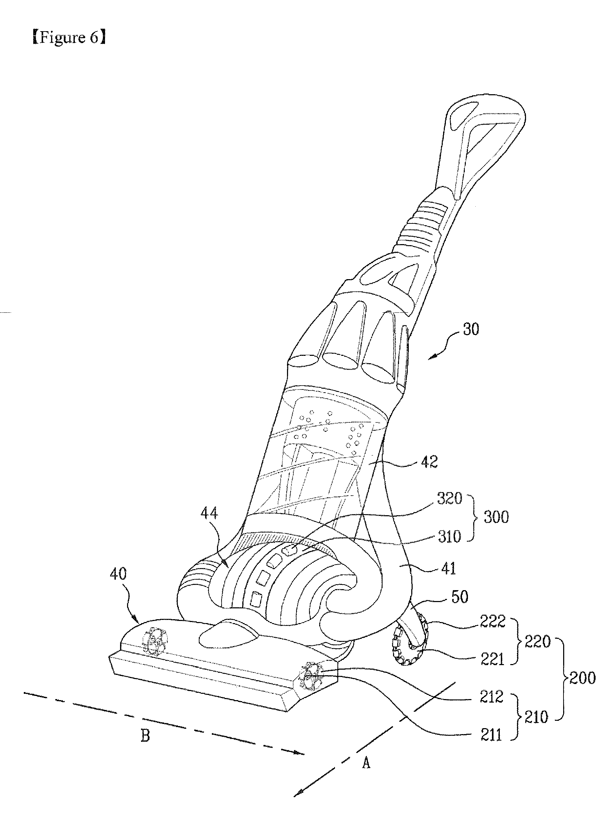

FIG. 6 is a diagram illustrating an upright type vacuum cleaner according to another embodiment.

The upright type vacuum cleaner according to this embodiment includes a body 30, a suction nozzle 40, a suction tube 41 connecting the suction nozzle 40 with the body 30 and a dust collection device 42 mounted in the body 30.

A suction motor (not shown) for generating a vacuum pressure and a motor accommodation part 44 are provided between the body 30 and the suction nozzle 40.

A supporting leg 50 is provided on a lower rear portion of the body 30 to support the body.

A wheel member 200 is mounted to each of the suction nozzle 40 and the supporting leg 50. for convenience sake, the wheel member 200 mounted in the suction nozzle 40 will be referenced to as a first wheel member 210 and the wheel member mounted in the supporting leg 50 will be referenced to as a second wheel member 220.

Here, the first wheel member 210 includes a main rotation member 211 guiding the forward/rearward movement of the body and the suction nozzle and an auxiliary rotation member 212 guiding the body and the suction nozzle toward a different direction from the above forward/rearward movement.

The second wheel member 220 includes a main rotation member 221 guiding the forward/rearward movement of the body and the suction nozzle and an auxiliary rotation member 222 guiding the body and the suction nozzle toward a different direction from the above forward/rearward direction.

Here, the configurations of the main rotation members 211 and 221 of the first and second wheel members 210 and 220 and the configuration of the auxiliary rotation members 212 and 222 are substantially identical to the configurations shown in FIGS. 3 and 4 and detailed description thereof will be omitted accordingly.

According to FIG. 6, a rotational direction of the auxiliary rotation members 212 and 222 is referenced to as'B'that is a leftward/rightward direction to be orthogonal with respect to a forward/rearward direction of the body.

However, the rotational direction of the auxiliary rotation members 212 and 222 is not limited to the leftward/rightward direction and the auxiliary rotation members 212 and 222 may be rotatable toward a diagonal direction with respect to'A'or'B'to move the body and the suction nozzle 40.

A wheel member 300 is provided in an outer circumferential surface of the motor accommodation part 44 and the wheel member 300 includes a main rotation member 310 rotatably provided toward'A'in a ring shape and an auxiliary rotation member 320 rotatably provided in the main rotation member 310, rotatable toward a different rotational direction from a rotational direction of the main rotation member 310.

The plurality of the auxiliary rotation member 320 may be provided along the main rotation member 310 and the auxiliary rotation member 320 may be roller-shaped.

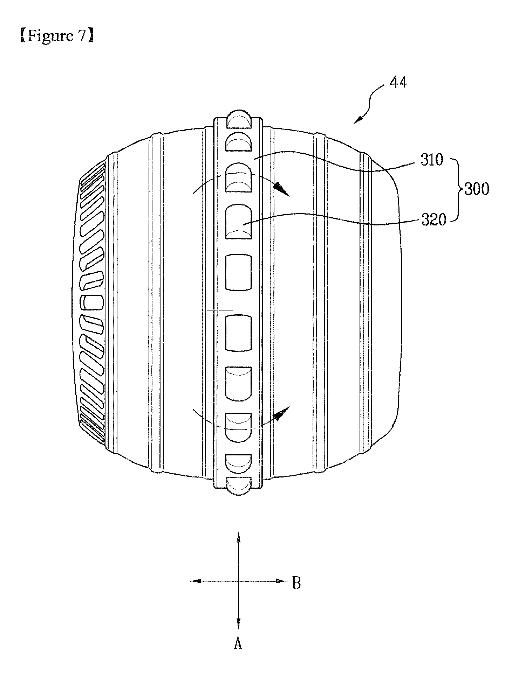

FIG. 7 is a diagram illustrating the wheel member 300 provided in the motor accommodation part 44 in detail.

The wheel member 300 is arranged along an outer circumferential surface of a center portion of the motor accommodation part 44. The shape of the motor accommodation part 44 is extendedly projected more and more toward the center from a left side enough to contact with the floor. If the wheel member 300 is mounted in such the raised center portion, the rotational movement may be performed smoothly.

The main rotation member 310 of the wheel member 300 is arranged rotatably along the outer circumferential surface of the center of the motor accommodation part 44.

The main rotation member is movable toward a forward/rearward (A) direction that is corresponding to the forward/rearward direction (B) of the body (30, see FIIG. 6).

The auxiliary rotation member 320 is rotatably provided on the main rotation member 310 and the rotational direction of the auxiliary rotation member 320 is arranged different from the rotational direction of the main rotation member 310.

The auxiliary rotation member 320 is roller-shaped and the plurality of the auxiliary rotation members 320 are arranged spaced apart a predetermined distance from each other.

Here also, the auxiliary rotation members 320 are directly in contact with the floor. If the user moves the body toward'A', the auxiliary rotation members 320 is rotated, with generating friction against the floor, to rotate the main rotation member 310 connected thereto toward 'A'.

At this time, the auxiliary rotation members 320 are rotated not at all or little toward'B'and the rotational movement of such the auxiliary rotation members 320 toward'B'may give no effect to the rotational movement of the main rotation member 310 toward'A'.

As the main rotation member 310 is rotatably provided on the motor accommodation part 44, the motor accommodation part 44 may be fixed to the body.

For such the operation, an outermost portion of the auxiliary rotation member 320 may be projected outward further than an outermost portion of the main rotation member 310.

If the user moves the body toward'B'direction, the auxiliary rotation members 320 are rotated toward'B'direction. When the auxiliary rotation members 320 are rotated in 'B' direction, the main rotation member 310 are rotated little or not at all in'B'direction.

Such the movement of the main rotation member 310 may give no effect to the rotational movement of the auxiliary rotation members 320 toward'B'direction.

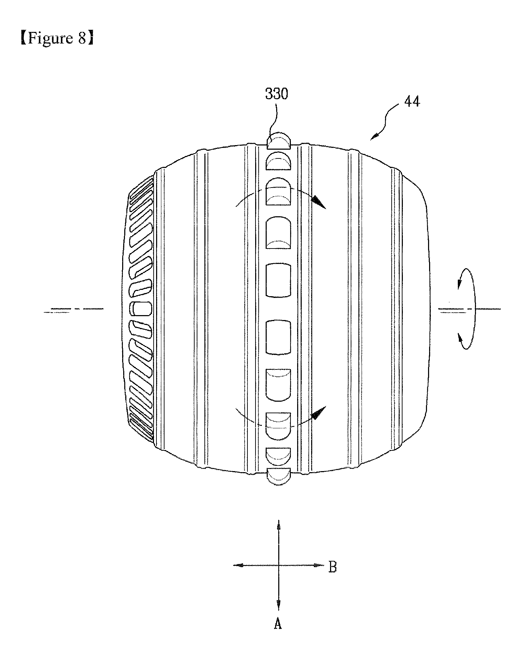

FIG. 8 is a diagram illustrating a wheel member mounted in the motor accommodation part 44 according to another embodiment.

The wheel member includes an auxiliary rotation member 330 provided in an outer circumferential surface of the motor accommodation part 44 in a roller-shape.

The plurality of the auxiliary rotation members 330 are provided and they are arranged spaced apart a predetermined distance from each other with respect to the circumferential surface of the motor accommodation part 44.

Here, it is preferable that the motor accommodation part 44 itself is rotatable in a forward/rearward direction and the auxiliary rotation members 330 are rotated in a different rotational direction from a rotational direction of the motor accommodation part 44.

That is, according to the drawing, the rotational direction of the motor accommodation part 44 is referenced to as 'A' and the rotational direction of the auxiliary rotation member 330 is referenced to as'B'. If the user pushes or pulls the body in'A'direction, the motor accommodation part 44 is rotated along this direction to help the movement of the body.

At this time, the auxiliary rotation members 330 maintain contact with the floor, moving along' A' direction.

In case the motor accommodation part 44 is rotated in a forward/rearward direction, the auxiliary rotation members 330 contact with the floor sequentially and thus the motor accommodation part 44 is rolling-moved forward or rearward to move the body.

In the meanwhile, if the user moves the body in'B'direction, the auxiliary rotation members 330 provided in the motor accommodation part 44 are rotated in'B'direction that is a leftward or rightward direction.

At this time, the motor accommodation part 44 is not in contact with the floor and the auxiliary rotation members 330 are rotated in'B'direction. Because of that, the motor accommodation part 44 may be rotated forward or rearward little or not at all.

As a result, the rotational movement of the auxiliary rotation members 330 enables the body to move in'B'direction smoothly.

This embodiment presents'A'and'B'directions are orthogonal to each other and these directions are not limited to be orthogonal.'A'and'B'directions may be diagonal to each other.

Thus, the rotational direction of the auxiliary rotation members 330 is arranged different from the rotational direction of the main rotation member (310, see FIG. 7) and the motor accommodation part 44 such that the body may be movable toward a direction intended by the user.

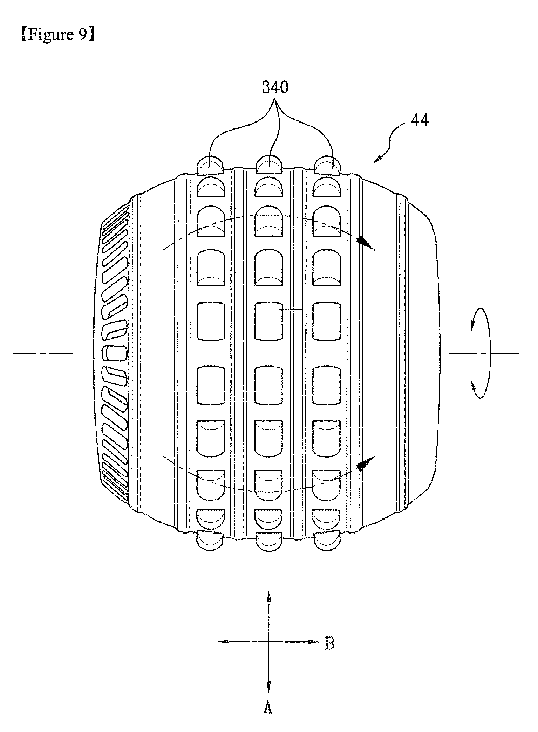

As shown in FIG. 9, the auxiliary rotation members 340 may be arranged in plural lines to make the rotational movement of the auxiliary rotation members 340 performed efficiently.

The arrangement of the auxiliary rotation members 340 in the plural lines may be applicable to the embodiment shown in FIG. 7 equally.

The rotational movement of the auxiliary rotation members 330 arranged in the plural lines and the rotational movement of the main rotation member (310, see FIG. 7) and the rotational movement of the motor accommodation part 44 are substantially identical to the embodiments shown in FIGS. 7 and 8 and detailed description thereof will be omitted accordingly.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

## Claims

1. An upright type vacuum cleaner comprising:
a body (10, 30);
a suction nozzle (20, 40) connected with the body (10, 30);
a first wheel member (110, 210); and
a second wheel member (120, 220, 300) formed larger than the first wheel member (110, 210) and the first wheel member (110, 210) is arranged in the suction nozzle (20, 40) and the second wheel member (120, 220, 300) is arranged in the body (10, 30),
wherein the first wheel member (110, 210) comprising a main rotation member (111, 211) and auxiliary rotation members (112, 212) are installed in the suction nozzle, wherein the auxiliary rotation members (112, 212) are rotatably provided on the main rotation member (111, 211) to be rotated in a predetermined rotational direction different from a rotational direction of the main rotation member (111, 211),
wherein the second wheel member (120, 220, 300) comprises:
a main rotation member (121, 221, 310) rotatably provided in the body (10, 30) and
auxiliary rotation members (122, 222, 320) rotatably provided on the main rotation member (121, 221, 310) to be rotated in a predetermined rotational direction different from a rotational direction of the main rotation member (121, 221, 310).

2. The upright type vacuum cleaner as claimed in claim 1, further comprising:
a plurality of accommodation parts (114, 124, 44) provided in the main rotation member (111, 121, 211, 221, 310) to accommodate the plurality of auxiliary rotation members (112, 122, 212, 222, 320) correspondingly.

3. The upright type vacuum cleaner as claimed in claim 1, wherein the plurality of the wheel members (110, 120, 210, 220) are rotatably provided in both opposite side portions of the body (10, 30) and both opposite side portion of the suction nozzle (20, 40).

4. The upright type vacuum cleaner as claimed in claim 1, wherein auxiliary rotation (112, 212) members of the first wheel member (110, 210) are arranged in both side portions of a main rotation member (111, 211) in two lines.

5. The upright type vacuum cleaner as claimed in claim 1, wherein auxiliary rotation (122, 222, 320) members of the second wheel member (120, 220, 300) are arranged along an outer circumferential surface of a main rotation member (121, 221, 310) in a single line.

6. The upright type vacuum cleaner as claimed in claim 1,
wherein the main rotation member (111, 121, 211, 221, 310) is configured to be rotated in a forward or rearward direction of the body (10, 30) and the suction nozzle (20, 40),
the auxiliary rotation members (112, 122, 212, 222, 320) are configured to be rotated towards a orthogonal or diagonal direction with respect to the rotational direction of the main rotation member (111, 121, 211, 221, 310).

7. The upright type vacuum cleaner as claimed in claim 1,
wherein the main rotation member (111, 211) of the first wheel member (110, 210) is provided in a disk shape and partition walls (115) are provided in the main rotation member (111, 211) to form the accommodation part (114, 124).

8. The upright type vacuum cleaner as claimed in claim 7,
wherein the accommodation parts (114, 124) are provided between the partition walls (115) to accommodate the auxiliary rotation members (112, 212) therein rotatably and,
the auxiliary rotation members (112, 212) accommodated in the accommodation parts (114, 124) are rotatably coupled to the partition walls (115).

9. The upright type vacuum cleaner as claimed in claim 6,
wherein the partition wall (115) is extended outward from a rotational shaft supporter of the first wheel member (110, 210) and,
an end of the partition wall (115) is divided in two ways to disperse the load in case of contacting a floor.

10. The upright type vacuum cleaner as claimed in claim 1,
wherein the auxiliary rotation members (112, 212) of the first wheel member (110, 210) are configured to be in the shape of a Rugby ball or a raised pot.

11. The upright type vacuum cleaner as claimed in claim 1, wherein the rotational direction of the main rotation member (111, 121, 211, 221, 310) and the rotational direction of the auxiliary rotation members (112, 122, 212, 222, 320) are formed different to a predetermined angle.

12. The upright type vacuum cleaner as claimed in claim 1, wherein outermost portions of the auxiliary rotation members (112, 122, 212, 222, 320) are projected outward further than an outermost portion of the main rotation member (111, 121, 211, 221, 310) to be contactable with a floor.

## Patentansprüche

1. Stielstaubsauger, der aufweist:
einen Körper (10, 30);
eine Saugdüse (20, 40), die mit dem Körper (10, 30) verbunden ist;
ein erstes Radelement (110, 210); und
ein zweites Radelement (120, 220, 300), das größer als das erste Radelement (110, 210) ausgebildet ist, und wobei das erste Radelement (110, 210) in der Saugdüse (20, 40) angeordnet ist und das zweite Radelement (120, 220, 300) in dem Körper (10, 30) angeordnet ist,
wobei das erste Radelement (110, 210) ein Hauptdrehelement (111, 211) aufweist, und Hilfsdrehelemente (112, 212) in der Saugdüse installiert sind, wobei die Hilfsdrehelemente (112, 212) auf dem Hauptdrehelement (111, 211) drehbar bereitgestellt sind, um in einer vorgegebenen Drehrichtung gedreht zu werden, die sich von einer Drehrichtung des Hauptdrehelements (111, 211) unterscheidet,
wobei das zweite Radelement (120, 220, 300) aufweist:
ein Hauptdrehelement (121, 221, 310), das in dem Körper (10, 30) drehbar bereitgestellt ist, und
Hilfsdrehelemente (122, 222, 320), die auf dem Hauptdrehelement (121, 221, 310) drehbar bereitgestellt sind, um in einer vorgegebenen Drehrichtung gedreht zu werden, die sich von einer Drehrichtung des Hauptdrehelements (121, 221, 310) unterscheidet.

2. Stielstaubsauger nach Anspruch 1, der ferner aufweist:
mehrere Aufnahmeteile (114, 124, 44), die in dem Hauptdrehelement (111, 121, 211, 221, 310) bereitgestellt sind, um die mehreren Hilfsdrehelemente (112, 122, 212, 222, 320) entsprechend aufzunehmen.

3. Stielstaubsauger nach Anspruch 1, wobei die mehreren Radelemente (110, 120, 210, 220) in beiden entgegengesetzten Seitenabschnitten des Körpers (10, 30) und beiden entgegengesetzten Seitenabschnitten der Saugdüse (20, 40) drehbar bereitgestellt sind.

4. Stielstaubsauger nach Anspruch 1, wobei die Hilfsdrehelemente (112, 212) des ersten Radelements (110, 210) in beiden Seitenabschnitten eines Hauptdrehelements (111, 211) in zwei Reihen angeordnet sind.

5. Stielstaubsauger nach Anspruch 1, wobei Hilfsdrehelemente (122, 222, 320) des zweiten Radelements (120, 220, 300) entlang einer Außenumfangsoberfläche eines Hauptdrehelements (121, 221, 310) in einer einzigen Reihe angeordnet sind:

6. Stielstaubsauger nach Anspruch 1,
wobei das Hauptdrehelement (111, 121, 211, 221, 310) aufgebaut ist, um in einer Vorwärts- oder Rückwärtsrichtung des Körpers (10, 30) und der Saugdüse (20, 40) gedreht zu werden,
die Hilfsdrehelemente (112, 122, 212, 222, 320) aufgebaut sind, um in Richtung einer orthogonalen oder diagonalen Richtung in Bezug auf die Drehrichtung des Hauptdrehelements (111, 121, 211, 221, 310) gedreht zu werden.

7. Stielstaubsauger nach Anspruch 1,
wobei das Hauptdrehelement (111, 211) des ersten Radelements (110, 210) in einer Scheibenform bereitgestellt ist und Trennwände (115) in dem Hauptdrehelement (111,211) bereitgestellt sind, um den Aufnahmeteil (114, 124) zu bilden.

8. Stielstaubsauger nach Anspruch 7,
wobei die Aufnahmeteile (114, 124) zwischen den Trennwänden (115) bereitgestellt sind, um die Hilfsdrehelemente (112, 212) darin drehbar aufzunehmen, und
wobei die in den Aufnahmeteilen (114, 124) aufgenommenen Hilfsdrehelemente (112, 212) drehbar mit den Trennwänden (115) gekoppelt sind.

9. Stielstaubsauger nach Anspruch 6,
wobei die Trennwand (115) von einem Drehwellenträger des ersten Radelements (110, 210) nach außen verlängert ist, und
ein Ende der Trennwand (115) in zwei Richtungen getrennt ist, um im Falle der Berührung eines Bodens die Last zu verteilen.

10. Stielstaubsauger nach Anspruch 1,
wobei die Hilfsdrehelemente (112, 212) des ersten Radelements (110, 210) derart aufgebaut sind, dass sie die Form eines Rugbyballs oder eines aufrechten Topfs haben.

11. Stielstaubsauger nach Anspruch 1, wobei die Drehrichtung des Hauptdrehelements (111, 121, 211, 221, 310) und die Drehrichtung der Hilfsdrehelemente (112, 122, 212, 222, 320) verschieden zu einem vorbestimmten Winkel ausgebildet sind.

12. Stielstaubsauger nach Anspruch 1, wobei die äußersten Abschnitte der Hilfsdrehelemente (112, 122, 212, 222, 320) weiter nach außen vorstehen als ein äußerster Abschnitt des Hauptdrehelements (111, 121, 211, 221, 310), um mit einem Boden in Berührung bringbar zu sein.

## Revendications

1. Aspirateur de type vertical comprenant :
un corps (10, 30) ;
une buse d'aspiration (20, 40) reliée au corps (10, 30) ;
un premier élément de roue (110, 210) ; et
un second élément de roue (120, 220, 300) formé plus grand que le premier élément de roue (110, 210) et le premier élément de roue (110, 210) est agencé dans la buse d'aspiration (20, 40) et le second élément de roue (120, 220, 300) est agencé dans le corps (10, 30),
dans lequel le premier élément de roue (110, 210) comprenant un élément de rotation principal (111, 211) et des éléments de rotation auxiliaires (112, 212) sont installés dans la buse d'aspiration, dans lequel les éléments de rotation auxiliaires (112, 212) sont prévus de manière à pouvoir tourner sur l'élément de rotation principal (111, 211) à tourner dans une direction de rotation prédéterminée différente d'une direction de rotation de l'élément de rotation principal (111, 211),
dans lequel le second élément de roue (120, 220, 300) comprend :
un élément de rotation principal (121, 221, 310) prévu de manière à pouvoir tourner dans le corps (10, 30) et
des moyens de rotation auxiliaires (122, 222, 320) prévus de manière à pouvoir tourner sur l'élément de rotation principal (121, 221, 310) à tourner dans une direction de rotation prédéterminée différente d'une direction de rotation de l'élément de rotation principal (121, 221, 310).

2. Aspirateur de type vertical selon la revendication 1, comprenant en outre :
une pluralité de parties de logement (114, 124, 44) prévues dans l'élément de rotation principal (111, 121, 211, 221, 310) pour loger la pluralité d'éléments de rotation auxiliaires (112, 122, 212, 222, 320) de manière correspondante.

3. Aspirateur de type vertical selon la revendication 1, dans lequel la pluralité d'éléments de roue (110, 120, 210, 220) sont prévus de manière à pouvoir tourner dans les deux parties latérales en regard du corps (10, 30) et à la fois la partie latérale en regard de la buse d'aspiration (20, 40).

4. Aspirateur de type vertical selon la revendication 1, dans lequel les éléments de rotation auxiliaires (112, 212) du premier élément de roue (110, 210) sont agencés dans les deux parties latérales d'un élément de rotation principal (111, 211) en deux lignes.

5. Aspirateur de type vertical selon la revendication 1, dans lequel les éléments de rotation auxiliaires (122, 222, 320) du second élément de roue (120, 220, 300) sont agencés le long d'une surface circonférentielle extérieure d'un élément de rotation principal (121, 221, 310) en une seule ligne.

6. Aspirateur de type vertical selon la revendication 1, dans lequel l'élément de rotation principal (111, 121, 211, 221, 310) est configuré pour être tourné dans une direction vers l'avant ou l'arrière du corps (10, 30) et la buse d'aspiration (20, 40), les éléments de rotation auxiliaires (112, 122, 212, 222, 320) sont configurés pour être tournés vers une direction orthogonale ou diagonale par rapport à la direction de rotation de l'élément de rotation principal (111, 121, 211, 221, 310).

7. Aspirateur de type vertical selon la revendication 1, dans lequel l'élément de rotation principal (111, 211) du premier élément de roue (110, 210) est prévu sous forme de disque et des parois de séparation (115) sont prévues dans l'élément de rotation principal (111, 211) pour former la partie de logement (114, 124).

8. Aspirateur de type vertical selon la revendication 7,
dans lequel les parties de logement (114, 124) sont prévues entre les parois de séparation (115) pour loger les éléments de rotation auxiliaires (112, 212) dedans de manière à pouvoir tourner et,
les éléments de rotation auxiliaires (112, 212) logés dans les parties de logement (114, 124) sont couplés de manière à pouvoir tourner aux parois de séparation (115).

9. Aspirateur de type vertical selon la revendication 6, dans lequel la paroi de séparation (115) est étendue vers l'extérieur depuis un support d'arbre de rotation du premier élément de roue (110, 210) et
une extrémité de la paroi de séparation (115) est divisée en deux voies pour distribuer la charge en cas de contact avec un sol.

10. Aspirateur de type vertical selon la revendication 1,
dans lequel les éléments de rotation auxiliaires (112, 212) du premier élément de roue (110, 210) sont configurés pour être en forme de ballon de rugby ou de pot relevé.

11. Aspirateur de type vertical selon la revendication 1, dans lequel la direction de rotation de l'élément de rotation principal (111, 121, 211, 221, 310) et la direction de rotation des éléments de rotation auxiliaires (112, 122, 212, 222, 320) sont formées de manière différente à un angle prédéterminé.

12. Aspirateur de type vertical selon la revendication 1, dans lequel des parties extérieures des éléments de rotation auxiliaires (112, 122, 212, 222, 320) sont en saillie vers l'extérieur plus loin qu'une partie extérieure de l'élément de rotation principal (111, 121, 211, 221, 310) pour pouvoir être en contact avec un sol.
